(19)

Europäisches
Patentamt
European
Patent Office
Office européen
des brevets

(11) **EP 1 863 605 B1**

(12) **EUROPEAN PATENT SPECIFICATION**

(45) Date of publication and mention
of the grant of the patent:
**23.09.2009 Bulletin 2009/39**

(51) Int Cl.:
***B21D 28/20*** *(2006.01)*     ***B30B 15/28*** *(2006.01)*
***F16F 9/512*** *(2006.01)*

(21) Application number: **05722297.8**

(22) Date of filing: **01.04.2005**

(86) International application number:
**PCT/SE2005/000473**

(87) International publication number:
**WO 2006/104428 (05.10.2006 Gazette 2006/40)**

(54) **SHOCK ABSORBER FOR MOVABLE TOOLS**

STOSSDÄMPFER FÜR BEWEGLICHE WERKZEUGE

AMORTISSEUR POUR OUTILS MOBILES

(84) Designated Contracting States:
**AT BE BG CH CY CZ DE DK EE ES FI FR GB GR
HU IE IS IT LI LT LU MC NL PL PT RO SE SI SK TR**

(43) Date of publication of application:
**12.12.2007 Bulletin 2007/50**

(73) Proprietor: **Morphic Technologies Aktiebolag
(publ)
691 51 Karlskoga (SE)**

(72) Inventors:
• **DAHLBERG, Anders
S-443 31 Lerum (SE)**

• **OLSSON, Håkan
S-691 45 Karlskoga (SE)**
• **ARVIDSSON, Björn
S-179 61 Stenhamra (SE)**

(74) Representative: **Andréasson, Ivar
Hynell Patenttjänst AB
Patron Carls väg 2
683 40 Hagfors/Uddeholm (SE)**

(56) References cited:
**FR-A1- 2 244 103**     **US-A- 4 233 872**
**US-A- 4 319 504**

## Description

### TECHNICAL FIELD

The present invention relates to a shock absorber for a movable tool, primarily a hydraulic shock absorber, and it is intended to be used particularly as a shock absorber in machines operating in a cycle and having a movable tool. The shock absorber according to the invention is intended primarily to be used in machines for cutting and punching of metals and other materials in the form of wires, bars, profiles, strips and the like.

### BACKGROUND OF THE INVENTION

Machines that make use of kinetic energy for various working operations such as cutting and punching have existed for long and in many different forms. Many of them have in common that a movable mass, such as a ram, is accelerated rectilinearly in order to hit a movable tool, such as a punching or cutting tool that cooperates with a fixed tool to perform the actual working operation, such as a cutting operation. The movable tool has a certain remaining velocity and thereby a certain remaining kinetic energy after the working operation, i.e. a residual energy. This residual energy must be absorbed by a shock absorber. Such a shock absorber is often positioned on the side opposite to the movable tool, as seen from the ram. Various types of shock absorbers are known from e.g. US Patent No. 4,339,975, US Patent No. 4,311,086 and US Patent No. 5,673,601.

US patent No. 4319504 discloses a dampening device for abruptly occurring forces in a shear or shear press machine. The dampening device disclosed in that patent exhibits a hydraulic damping piston co-operating with a moving tool and a control piston attached adjustably to a stationary machine part. The damping piston is slideable coaxially in a damping cylinder attached to the stationary machine part into which the control piston also protrudes coaxially. The control piston co-operates with a control cylinder constructed in the damping piston. An annular pressure chamber surrounding the control piston and its piston rod is thus constructed between a base of the damping cylinder and the opposite end face of the damping piston. The base also contains a connecting line for the supply and discharge of the pressurized medium into the annular pressure chamber 29. The control piston is guided in the control cylinder whilst the passage of the pressurized medium can occur between them.

US patent No. 4233872 discloses a system for hydraulic shock absorption in a punch or cutting press. The system disclosed in that patent comprises a damping cylinder that is under a preset pressure supplied by a pump with the pressure chamber of the cylinder being connected with a damping valve. The damping valve has a piston-type damping element including a throttle member, the construction and design of which provides for pressure-dependent adjustment of said throttle member in a housing on axial movement of the throttle member.

When the working operation is finished and the movable tool has been braked in a manner that is suitable for the process and as gentle as possible for the machinery, the movable tool must be returned to its initial position in order to be able to perform a new working blow. When this has taken place, new material can be fed forward for the next working operation.

Accordingly, two functions have to be handled in connection with machines with movable tools. Firstly, one must be able to brake the motion of the movable tool after the working operation (such as a cutting operation). Secondly, one must be able to return the movable tool before the next working operation. The switching between these two functions can be manoeuvred actively from the machine's control system, or passively, without interference from external units. The active variant requires accurate synchronisation and knowledge of the size of the residual energy in order to ensure that all kinetic energy is really absorbed before a switch in function. A passive shock absorber handles this in itself, and switches functions when shock absorbing is completed and it is time to return the tool.

It is desirable for a shock absorber for kinetic machines to absorb as much as possible of the supplied residual energy and to return as little as possible. Designs that use elastomers or air all have the characteristic that a large portion of the residual energy is returned to the movable tool, whereby the tool bounces against the shock absorber instead of being slowed down and stopped. Several known hydraulic shock absorbers also have this drawback, partly due to the compressibility of the hydraulic liquid, the effect of which is easily underestimated.

A desirable property of a shock absorber for kinetic cutting machines is that the shock absorber slows down the tool's movement as little as possible during initial tool movement, when the actual cutting operation takes place. It is optimal if the tool is not slowed down at all, for example by the part of the shock absorber that is applied against the tool in order to slow down its movement is not at all in contact with the tool when the ram hits the tool, but is applied only after a short distance of movement. Such a device is very hard to realize without having to make the shock absorber active. This is because the returning of the tool requires some device to in reality bring the movable tool to its return position. A shock absorber without a forced returning power is difficult to make as fast and reliable as is a shock absorber that utilises a forced returning power. Accordingly, the movable tool is often returned by a device that presses the movable tool against a stop and thereby aligns the fixed and the movable tools. For the optimal case to result, this device must be withdrawn after the material has been brought through the tools, but before the ram hits the tool, a time period of about 10 to 100 milliseconds, depending on the size of the machine. This is far from impossible, but a malfunctioning of such a device may result in breakdown, operations disturbance or the production of faulty components.

It is an object of the present invention to provide an improved shock absorber for machines having a movable tool, being able to slow down the movement fast, to absorb the kinetic energy and to return the movable tool to its starting point. Furthermore, it is an objective of the invention for the shock absorber to slow down the movement of the movable tool as little as possible in the beginning of a working operation. These and other objective can be realised by the present invention, which is clear from the following description.

ACCOUNT OF THE INVENTION

The invention relates to a hydraulic shock absorber for machines operating in a cycle and having a movable tool. The shock absorber comprises a housing with a first chamber that is filled with a hydraulic liquid, and at least a first piston that is movably arranged in the housing. The piston is arranged in a first end thereof to receive a blow from a movable tool, and by its motion to transmit kinetic energy from the blow to the hydraulic liquid in the first chamber. The shock absorber also comprises means for returning the first piston to its starting position, after the blow, such that the piston can receive a new blow. Said means for returning the first piston may comprise a chamber with a pressurized hydraulic liquid that acts on a surface area of the first piston in such a direction that the piston is pressed in a direction towards its starting position.

In one embodiment of the invention, the piston is arranged to have its ends positioned in different chambers, the areas of the ends of the pistons and the pressure in the two chambers being chosen such that a compressive force from the hydraulic liquid acts to return the piston to its starting position. Both chambers can then be connected to a source of a pressurized hydraulic liquid, which source is in common for the two chambers. A distal end of the piston, as seen in the direction of the blow, will then have a larger surface area, while a proximal end of the piston, as seen in the direction of the blow, will have a smaller surface area, such that the resulting compressive force from the hydraulic liquid strives to return the piston to its starting position.

According to another embodiment, said first chamber can be divided in a subchamber that is distal in relation to the first end of the piston, and a subchamber that is proximal in relation to the first end of the piston. Said means for returning the first piston to its starting position after the blow may then comprise a collar on the first piston, which collar has a distal surface area and a proximal surface area, which proximal surface area is smaller than the distal surface area.

In a preferred embodiment, the shock absorber according to the invention comprises a housing having a first chamber filled with a pressurized hydraulic liquid, and a second housing filled with a pressurized hydraulic liquid. The second chamber is connected with the first chamber via a first non return valve that is arranged to open when the pressure in the second chamber is greater than the pressure in the first chamber. The shock absorber further comprises at least a first piston that is arranged to be movable in the housing, and that is arranged in a first end thereof to be able to receive a blow from a movable tool. A second end of said first piston is positioned in the second chamber, whereby a blow from a movable tool can make said first piston move inwards in the second chamber, thereby to increase the pressure in the second chamber to a level at which the first non return valve opens When the first non return valve opens, pressurized hydraulic liquid will start to flow from the second chamber to the first chamber. The first chamber has furthermore (in preferred embodiments) an outlet adapted to allow for inflow and outflow of hydraulic liquid to or from, respectively, the first chamber. In preferred embodiments, the first non return valve may be loaded by one or more elastic elements pressing the first non return valve towards a closed position.

In advantageous embodiments, the second chamber is connected, via a second non return valve, to a source of a pressurized hydraulic liquid, such that the second non return valve opens when the pressure in the second chamber decreases a predetermined level. Embodiments are however conceivable in which the second non return valve and its connection to a source of pressurized hydraulic liquid is not used.

In preferred embodiments, the housing is provided with a third chamber and in that case the first piston is provided with at least one stop arranged to meet a limiting surface area of the third chamber. Thereby, the piston's movement is limited in a direction opposite the direction of the blow, such that the first piston will reach a proximal end position, as seen in relation to the movable tool, when the stop of the first piston meets said limiting surface area.

In preferred embodiments, the third chamber is a gas filled chamber in which the pressure preferably is the same as the atmospheric pressure.

The invention is primarily intended to be a passive shock absorber. In preferred embodiments of the invention, the shock absorber comprises a second piston - a shock absorbing piston - that preferably bears continuously against the movable tool. The second piston is arranged to be movable inside the housing, and is arranged at a first end thereof to get in direct contact with the movable tool, and at a second end thereof to face the first end of the first piston, such that a blow of the movable tool can be transmitted to the first piston via the second piston. Preferably, the second piston or the shock absorbing piston has a minimal weight and diameter (it should be realised however that the weight and diameter is influenced by several factors, such as a required strength). Suitably, it may bear against the movable tool by a fairly moderate force, enough only to secure that the tool is returned within a short enough time period.

How long this time period is, how long time that the tool blocks the feeding forward of new material, may depend on several factors, such as a desired maximum production rate.

The housing is suitably provided with a fourth chamber into which the first end of the first piston extends when the first piston reaches its end position which is proximal in relation to the movable tool. In a preferred embodiment, the fourth chamber is filled with a pressurized hydraulic liquid. A gap may exist between the first end of the first piston and the second end of the second piston, when the shock absorber is in a starting position. Then, the second piston must move a certain distance before it can transmit a blow from the movable tool to the first piston.

The second end of the second piston and the first end of the first piston preferably have planar surface areas that are parallel to each other. In this case, the end surface areas are preferably equal in size.

The fourth chamber can be connected via a third non return valve to a source of a pressurized hydraulic liquid, such that the third non return valve opens when the pressure in the fourth chamber decreases a predetermined level. In this case, the second chamber and the fourth chamber are suitably connected to the same source of pressurized hydraulic liquid.

In a particularly advantageous embodiment of the invention, the outlet of the first chamber is connected to an accumulator for hydraulic liquid: The accumulator can be used among other things to contribute to the driving of the movable tool.

Suitably, the fourth chamber has an outlet arranged to allow for inflow and outflow of hydraulic liquid, to and from, respectively, the fourth chamber. In advantageous embodiments of the invention, the outlet of the fourth chamber is also connected to an accumulator for hydraulic liquid.

In its second end, the first piston has an end surface area that in advantageous embodiments is larger than the end surface area of the first end.

BRIEF DESCRIPTION OF THE DRAWINGS

Fig. 1  is a schematic representation of a kinetic cutting machine using a shock absorber that can be a shock absorber according to the present invention.

Fig. 2  shows the same cutting machine as in Fig. 1, but here immediately after the machine has made an operating stroke.

Fig. 3  shows, in a cross-section according to A-A in Fig. 1, the shock absorber according to the invention in a first position before the movable tool has made its stroke. Here, the shock absorber is in a resting position.

Fig. 4  is a magnification of some details in Fig. 3.

Fig. 5  shows a view corresponding to Fig. 3, but in which the movable tool has made a stroke and the shock absorber according to the invention has started to receive the blow from the movable tool.

Fig. 6  shows a view corresponding to Fig. 3 and Fig. 5, in which the first piston has begun to be pressed into the second chamber, by the blow of the movable tool.

Fig. 7  shows a view corresponding to Fig. 6, in which the first non return valve has been opened and hydraulic liquid flows from the second chamber and into the first chamber.

Fig. 8  shows a position in which the first non return valve is starting to close.

Fig. 9  shows a position in which the first non return valve has returned to a closed position, but in which the first piston has not yet returned to its starting position.

Fig. 10  shows a position in which the pistons are about to be returned.

Fig. 11  shows a position in which the movable tool is about to be aligned in the proper position.

Fig. 12  shows the shock absorber and the movable tool once again in a starting position for a new operating stroke.

Fig. 13  shows in perspective a conceivable design of the first non return valve.

Fig. 14  shows an embodiment of the invention in which it is possible to vary the distance that the second piston moves before it gets in contact with the first piston.

Fig. 15  shows a part of the embodiment shown in Fig. 14, in greater detail.

Fig. 16  shows yet an embodiment of the invention, in which the first chamber of the shock absorber has been given a different design.

Fig. 17  is a magnification of a part of Fig. 16.

DETAILED DESCRIPTION OF THE INVENTION

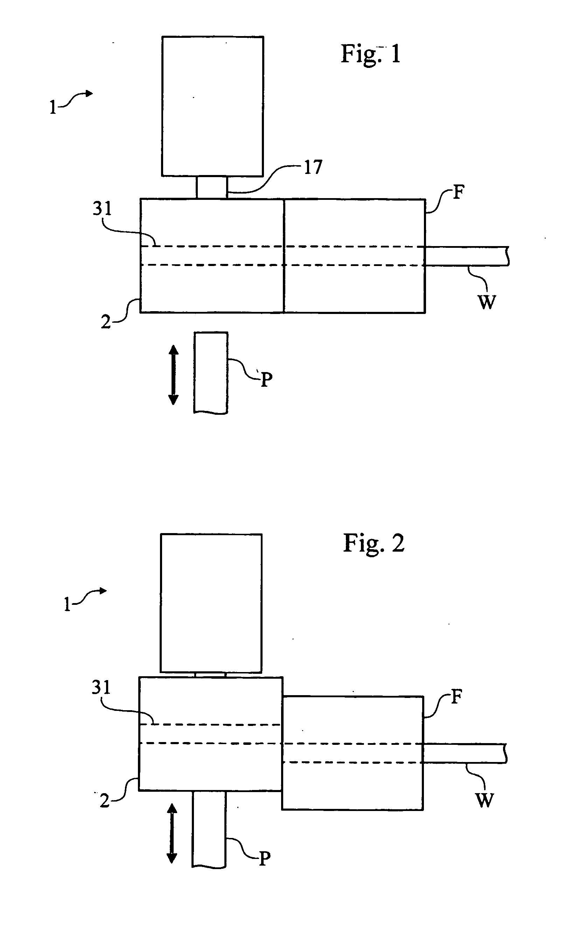

In the following, the invention will be explained while referring to a case in which the invention is used in connection with a kinetic cutting machine for wires and bars. It should be understood however that the shock absorber according to the invention can be used also for other machines operating in a cycle and having a movable tool. Fig. 1 shows a work piece W in the form of a wire or a bar W that has been fed forward to a machine with a fixed tool F and a movable tool 2. The movable tool 2 has a through hole 31 for the wire or the bar W, and there is also a corresponding through hole in the fixed tool F. Then, the work piece W can be brought to pass through the fixed tool F and into the movable tool 2. In connection with the movable tool 2, there is a piston P that is able to make an operating stroke against the movable tool 2. Fig. 2 shows how the piston P has made a blow against the movable tool 2, such that the movable tool 2 is no longer in its original position. The fixed tool F is however still in its original position. The through holes in the fixed F tool and the movable tool 2 will then no longer be aligned. The part of the work piece W that is inside the movable tool 2 has then been blown off from the rest of the work piece W. As is shown in Fig. 2, the movable tool 2 will hit the shock absorber 1. The shock absorber 1 should then be able to brake the movement of the movable tool 2, and most preferably also be able to return the movable tool 2 to its starting position. As soon as the movable tool 2 has been returned to its starting position, such that the through holes of the tools are aligned, the work piece W can be fed forward. Unless already removed, the previously cut part of the work piece, left in the movable tool, will be pushed out when the work piece W is fed forward.

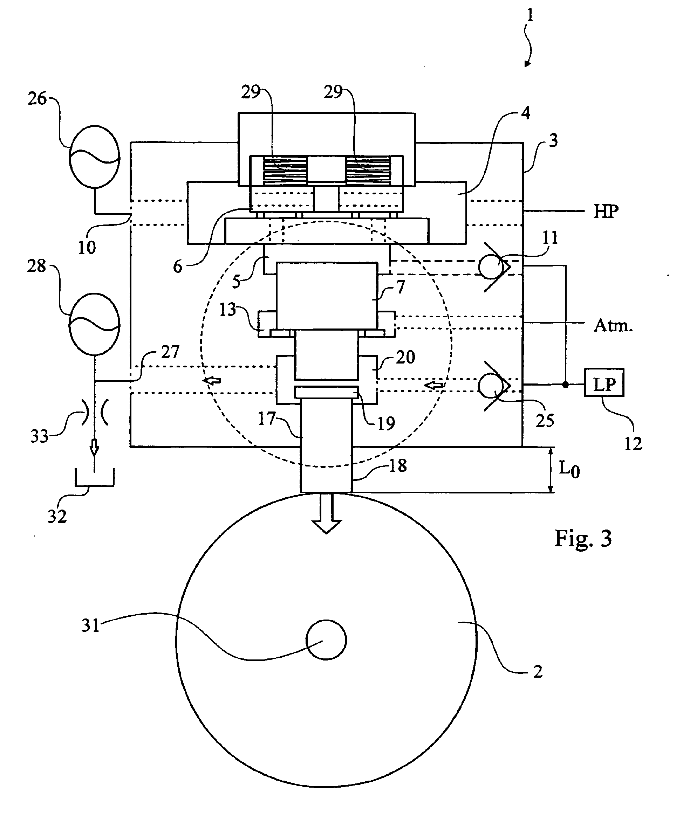

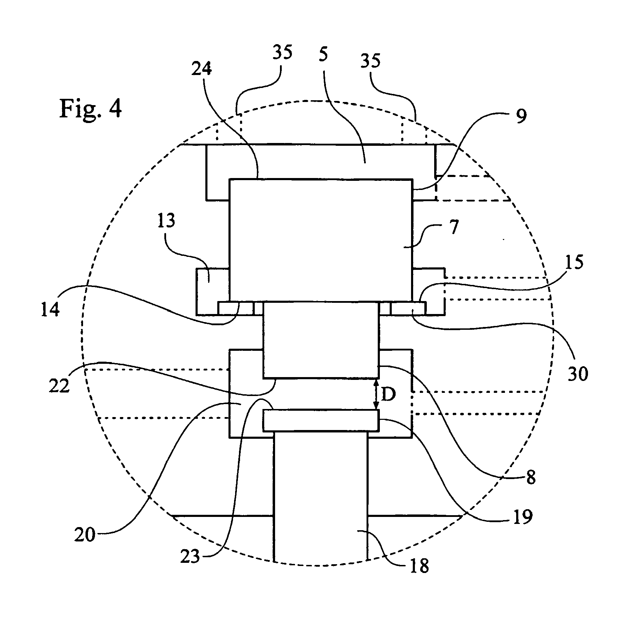

An advantageous embodiment of the invention will now be described in greater detail with reference to Figs. 3 and 4. Fig. 3 shows a hydraulic shock absorber 1 for machines operating in a cycle. Fig. 3 shows, at the bottom end thereof, a movable tool 2, the movement of which the shock absorber according to the invention is intended to brake. The shock absorber 1 comprises a housing 3 having a first chamber 4. The first chamber 4 is filled with a pressurized hydraulic liquid. The housing 3 also has a second chamber 5, which is also filled with a pressurized hydraulic liquid. The second chamber 5 is connected with the first chamber 4 via a first non return valve 6 that is arranged to open when the pressure in the second chamber 5 is greater than the pressure in the first chamber 4. The drawings show how one or more conduits/channels 35 connect the first chamber 4 with the second chamber 5, and how the first non return valve 6 is positioned in connection with an outlet for the channel or channels 35, which outlet leads into the first chamber 4 when the first non return valve 6 is open. The shock absorber further comprises at least a first piston 7 that is arranged to be movable in the housing 3. The first piston 7 is arranged in a first end 8 thereof to be able to receive a blow from a movable tool 2. A second end 9 of the first piston 7 is positioned in the second chamber 5. A blow from a movable tool 2 will then make said first piston 7 move inwards in the second chamber 5. Thereby, the pressure in the second chamber 5 will be raised to a level at which the first non return valve 6 opens, and pressurized hydraulic liquid starts to flow from the second chamber 5 into the first chamber 4. The first chamber 4 has furthermore an outlet 10 arranged to allow for inflow and outflow of hydraulic liquid, to and from, respectively, the first chamber 4. In advantageous embodiments of the invention, the second chamber 5 is connected, via a second non return valve 11, to a source 12 of a pressurized hydraulic liquid, such that the second non return valve 11 opens when the pressure in the second chamber 5 decreases a predetermined level.

In preferred embodiments, the housing 3 is provided with a third chamber 13. Then, the first piston 7 may be provided with at least one stop 14 arranged to meet a limiting surface area 15 of the third chamber 13. Then, the movement 7 of the piston can be limited in a direction opposite the direction of the blow. The first piston 7 will accordingly reach an end position that is proximal in relation to the movable tool 2, when the stop 14 of the first piston 7 meets said limiting surface area 15. In a preferred embodiment, said stop 14 may be a lower surface area 14 on an upper part of the first piston 7, which upper part of the piston has a larger diameter. In practice, it can be suitable to use pistons having a circular cylindrical shape, even if other shapes are conceivable as such. Then, the stop 14 can be achieved by the piston 7 having a diameter transition from a smaller diameter to a larger diameter. It should be realised however that the stop could be otherwise formed. The limiting surface area 15 of the third chamber 13 is here shown as the upper surface area of a ring 30 that is positioned on the bottom of the third chamber 13. The ring 30 can be made of an elastomer, such as rubber. This will result in a gentler braking of the first piston 7, during the return.

In preferred embodiments of the invention, the third chamber 13 is a gas filled chamber 13 in which the pressure preferably is the same as the atmospheric pressure.

The shock absorber 1 could advantageously comprise a second piston 17 arranged in the housing 3. The second piston 17 is then arranged at a first end 18 thereof to get in direct contact with the movable tool 2, and at a second end 19 thereof to face the first end 8 of the first piston 7. Thereby, a blow of the movable tool 2 can be transmitted to the first piston 7 via the second piston 17. Advantageously, the second piston 17 could have a flange that prevents the piston 17 from being pushed out from the shock absorber 1 if the shock absorber is pressurized by mistake without the piston 17 bearing against a tool 2.

The housing 3 may further have a fourth chamber 20 into which the first end 8 of the first piston 7 extends when the first piston 7 reaches its end position which is proximal in relation to the movable tool 2. Then, the fourth chamber 20 is filled with a pressurized hydraulic liquid. As is best seen in Fig. 4, a gap D is arranged between the first end 8 of the first piston 7 and the second end 19 of the second piston 17, in a starting position for the shock absorber 1. Then, the second piston 17 must move a certain distance D before it can transmit a blow from the movable tool 2 to the first piston 7. The second end 19 of the second piston 17 and the first end 8 of the first piston preferably have planar surface areas 22, 23, that are parallel to each other. The end surface areas 22, 23 are preferably equal in size. Fig. 3 for example shows how the fourth chamber 20 can be connected to a source 12 of pressurized hydraulic liquid. The connection may comprise a third non return valve 25, and may be designed such that the third non return valve 25 opens when the pressure in the fourth chamber 20 decreases a predetermined level. In preferred embodiments, the second chamber 5 and the fourth chamber 20 are suitably connected to the same source 12 of pressurized hydraulic liquid. In the drawings, the upper surface area 23 of the second piston 17 is shown to be of equal size as the lower surface area 22 of the first piston 7. It is however conceivable that the lower surface area 22 of the first piston 7 is of equal size as the cross-sectional area of the piston rod of the second piston 17. In that case, the advantage is achieved that no oil is transported into or out from the fourth chamber 20 when the two pistons 7, 17 move concurrently.

In a particularly advantageous embodiment, the outlet 10 of the first chamber 4 is connected to an accumulator 26 for hydraulic liquid. An accumulator that is suitable for this purpose is sold by, among others, HYDAC INTERNATIONAL GmbH having the address Postfach 1251 Sulzbach/Saar, Germany. HYDAC sells a type of accumulator that is called bladder accumulator (German: "*Blasenspeicher*"). A particularly suitable type of accumulator is the type of accumulator that by HYDAC is called a "High-Flow bladder accumulator" (German: "*High-Flow Blasenspeicher*"). In Sweden, such accumulators can be purchased from HYDAC Fluidteknik AB having the address Karlsbodavägen 39, Mariehäll, Box 20112, S-16102 BROMMA. It should be understood however that HYDAC is but one supplier of many, and that suitable bladder accumulators can be obtained also from other suppliers. The accumulator 26 that is arranged to receive hydraulic liquid from the first chamber 4, can be used to drive the piston P that is used to give the movable tool 2 a blow.

In embodiments having a fourth chamber, the fourth chamber 20 too can have an outlet 27 that is arranged to allow for inflow and outflow of hydraulic liquid, to or from, respectively, the fourth chamber 20. The outlet 27 of the fourth chamber 20 may then be connected to an accumulator 28 for hydraulic liquid. This accumulator too can e.g. be a High-Flow bladder accumulator from HYDAC.

In preferred embodiments of the invention, the first non return valve 6 may be loaded by at least one elastic element 29 pressing the first non return valve 6 towards a closed position. Said at least one elastic element 29 can e.g. be a number of cup springs 29.

In preferred embodiments of the invention, the first piston 7 has an end surface area 24 in its second end 9, which end surface area 24 is larger than the end surface area 22 of the first end 8.

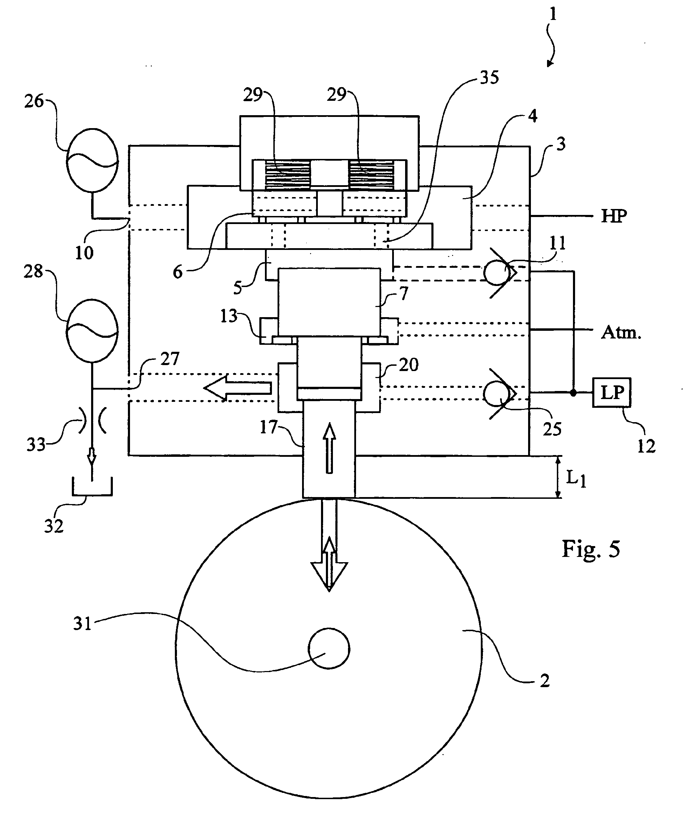

The function of the shock absorber according to the invention will now be explained with reference to Figs. 3 and 4 and Figs. 5-12. Fig. 3 shows the shock absorber 1 and the movable tool 2 at the time point $t_0$, in a starting position before an operating stroke. The second piston 17 rests directly on the movable tool 2, and the movable tool 2 is at a distance $L_0$ from a lower part of the housing 3. As is clear from Fig. 4, the lower end of the first piston 7 is at a distance D from the upper end of the second piston 17. The pressure in the first chamber 4 is preferably high, suitably a pressure in the magnitude of 10-30 MPa (100-300 bar). In one embodiment contemplated by the inventor, the pressure in the first chamber can be 20 MPa or about 20 MPa. In the second chamber 5 there is preferably a lower pressure than in the first chamber 4. The pressure in the second chamber 5 is suitably 0.1-10 MPa, and preferably 1-5 MPa. Accordingly, the non return valve 6 is kept closed, and no hydraulic liquid can move from the second chamber 5 to the first chamber 4. Furthermore, a number of strong cup springs 29 are acting on the first non return valve 6, in order to additionally prevent the non return valve 6 from opening. It is realised that the non return valve 6 also prevents hydraulic liquid (suitably hydraulic oil) from getting from the first chamber 4 to the second chamber 5. Also the fourth chamber 20 is filled with pressurized hydraulic liquid, in practice usually hydraulic oil. The fourth chamber 20 is suitably connected to the same pressure source as the second chamber 5, and accordingly it has a pressure in the magnitude of 1-5 MPa. By connecting the fourth chamber to the same source of pressurized hydraulic liquid as the second chamber, the advantage is obtained that the number of pressure sources can be minimized. A constant oil leakage through the throttling 33, to tank, makes sure that the liquid in the fourth chamber 20 will not get hot or that air or particles accumulate in the fourth chamber 20. Fig. 5 shows the situation at the time point $t_1$, immediately after the movable tool 2 has received a blow from below and has started to move upwards towards the shock absorber 1. As a consequence of the blow, the second piston 17 has moved upwards and has met the lower end surface area 22 of the first piston 7. Then, the second piston has to move against a certain resistance, since the fourth chamber 20 is pressurized. A certain amount of hydraulic liquid/oil will then be pressed out from the fourth chamber 20, via its outlet 27. The oil that is pressed out can be led to an accumulator 28, or via a throttling to an oil tank 32. The resistance met by the second piston 17 is however very small and the piston can move fairly unhindered. Accordingly, the movable tool 2 is not much affected in its movement. Fig. 5 shows the distance as $L_1$, between the movable tool 2 and the lower part of the housing 3. It is realised

that the distance $L_1$ in Fig. 5 is somewhat less than the distance $L_0$ in Fig. 3. It should be understood that in practice, the second piston 17 can move very fast, up to about 15 meters per second. This fast pressing-in will lead to a compression of the oil before it has time to be pressed out from the fourth chamber 20, which in turn means that the pressure rises. Accordingly, the outlet 27 must have a large enough cross-sectional area in order to be able to receive the oil flow that results when the second piston is pressed inwards in the fourth chamber. If this is not the case, the pressure will rise fast and will become too high, which may result in a too large premature braking of the movement of the tool 2.

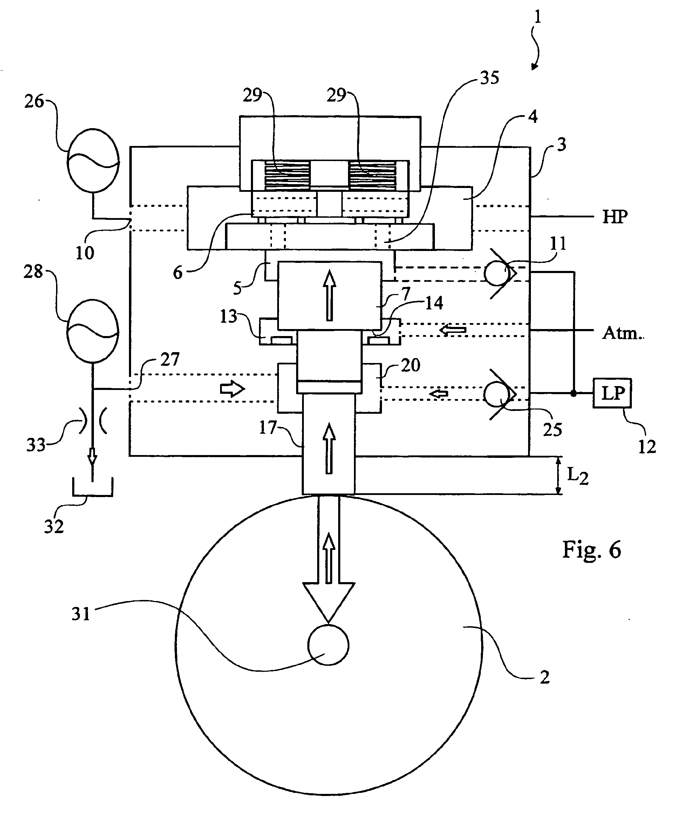

Fig. 6 shows the situation at a somewhat later time point $t_2$ of the shock absorbing process. The second piston 17 has begun to force the first piston 7 to move upwards through the second chamber 5. As a result, the pressure will rise in the second chamber 5. The pressure in the second chamber 5 is however not high enough for the first non return valve 6 to open. Also the movable tool 2 continues its movement and the distance is now $L_2$ between the movable tool 2 and the lower part of the housing 3. The distance $L_2$ is less than the distance $L_1$ in Fig. 5. Since the first piston 7 has started to move upwards, the upper part of the piston 7 will no longer bear against the lower limiting surface area 15 for the third chamber. By the third chamber being filled with gas (suitably air) at atmospheric pressure, instead of being filled with hydraulic liquid, the risk of cavitation is avoided.

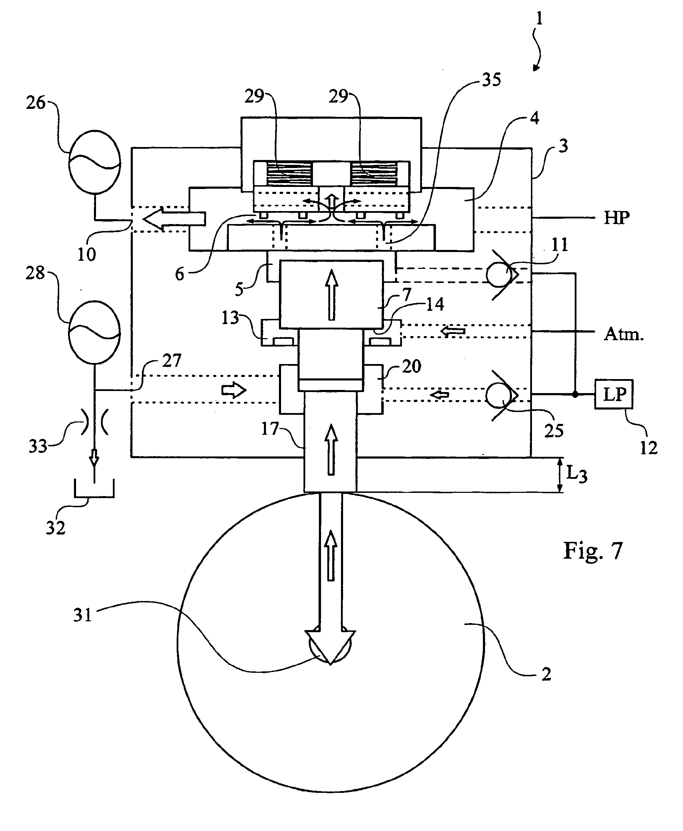

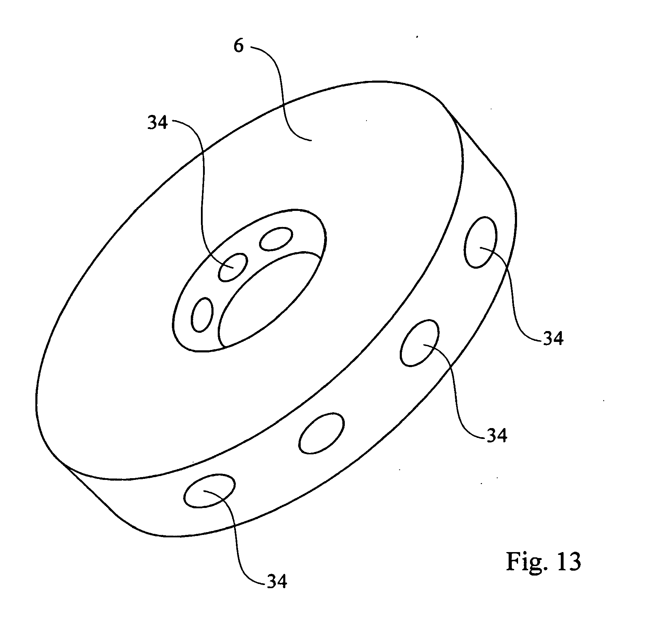

Fig. 7 shows the situation at a time point $t_3$ after situation in Fig. 6, i.e. $t_3$ is a later point in time than $t_2$. At the time point shown in Fig. 7, the second piston 7 has moved even further into the second chamber 5. The distance between the movable tool 2 and the lower part of the housing 3 has become smaller and is shown as $L_3$, where $L_3$ is less than the distance $L_2$ in Fig. 6. In practice, this means that hydraulic oil in the second chamber 5 has been exposed to a compression in the magnitude of 1-3 %. This results in a considerable increase of the pressure in the second chamber 5, whereby the pressure increases from a starting level of 1-5 MPa to a level that exceeds the pressure in the first chamber 4. In practice, this can mean that the pressure in the second chamber 5 rises all the way up to 50 MPa. Then, the cup springs 29 and the pressure in the first chamber 4 can no longer keep the first non return valve 6 in a closed position, but the first non return valve 6 opens and hydraulic liquid starts to flow from the second chamber 5 to the first chamber 4. As is most clear from Fig. 13, the first non return valve 6 may comprise a disc shaped circular body having a large central opening and a plurality of channels 34, through which channels 34 hydraulic liquid can flow out. Hydraulic liquid can also flow out into the first chamber 4 underneath the disc shaped body that is indicated by arrows in Fig. 7. When hydraulic liquid at high pressure is forced into the first chamber 4, the pressure in the first chamber 4 will increase. Then, hydraulic liquid will start to be forced out from the first chamber 4, via the outlet 10. In principle, the outlet 10 can be closed by a valve that is arranged quite simply to let hydraulic liquid out when the pressure exceeds a certain predetermined level. Such a valve may be a non return valve. According to a preferred embodiment of the invention, the outlet 10 is connected to an accumulator 26. The accumulator 26 is preferably a bladder accumulator, such as a bladder accumulator obtainable from HYDAC GmbH. The accumulator 26 will receive hydraulic liquid at a high pressure, from the first chamber 4, and will thereby store energy to be used e.g. to drive the movable tool 2. In practice, this "recovery" means that the capacity of the pressure source need not be as large as would otherwise be necessary.

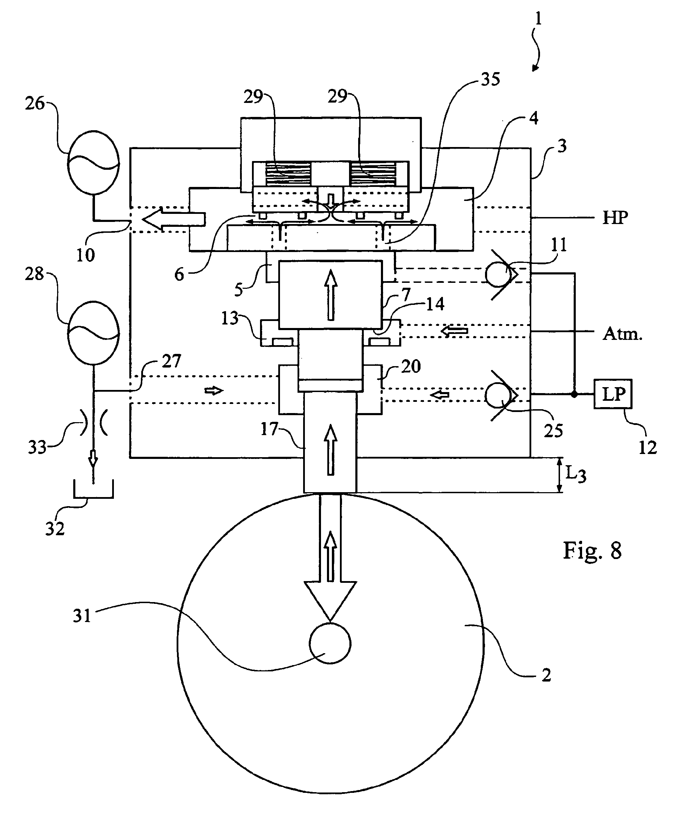

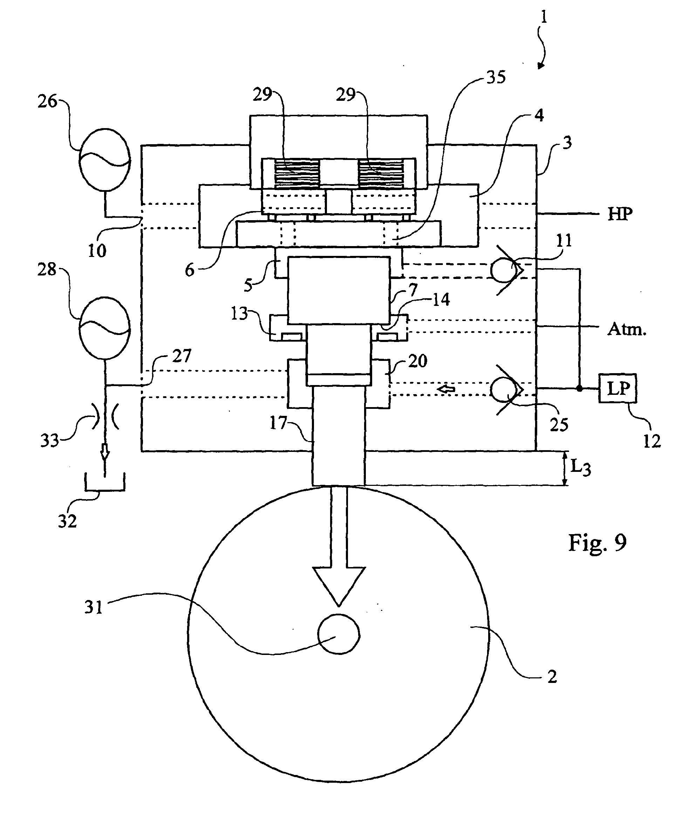

Fig. 8 shows the situation at an even later time point, the time point $t_4$ that is later than $t_3$. The movement of the movable tool 2 has now been stopped, and the hydraulic liquid in the second chamber 5 will not be additionally compressed. The pressure will then start to decrease. The first non return valve 6 starts to close, under influence from the cup springs 29. Fig. 9 shows the situation at a time point $t_5$ immediately after the first non return valve 6 has closed ($t_5$ is later than $t_4$). Now, the pressure in the first chamber 4 has decreased to the same level as before the first non return valve 6 was opened. In the second chamber 5, there is however a high pressure that is above the initial pressure level in the second chamber 5. The pressure in the second chamber 5 acts on the upper end surface area 24 of the first piston. The first piston 7 bears against the second piston 17, which in turn bears against the movable tool 2. Accordingly, the pressure in the second chamber 5 will act to return the movable tool 2 back to its starting position.

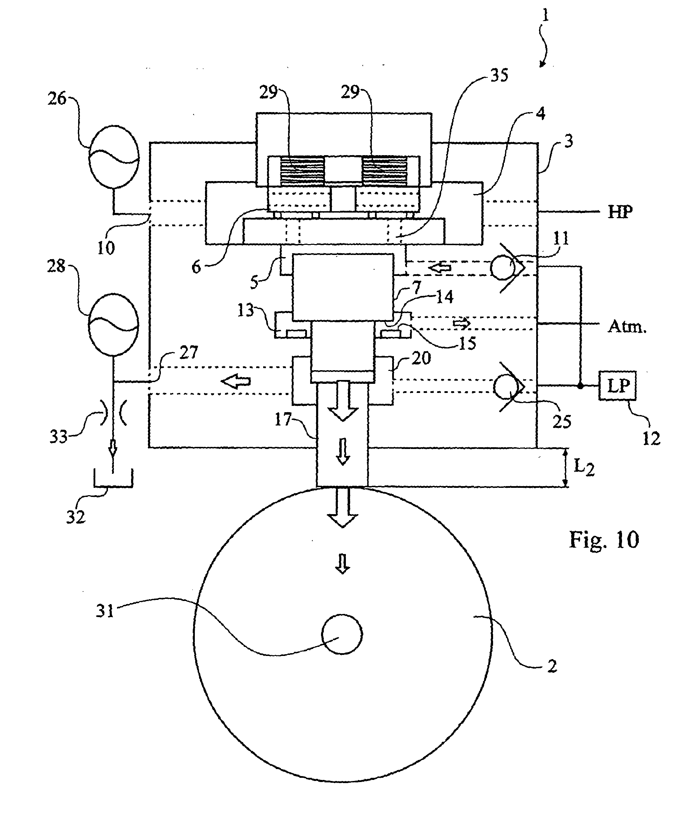

Fig. 10 shows the situation at an even later time point, the time point $t_6$ that is later than the time point $t_5$. As is clear from Fig. 10, the two pistons 7, 17 have been pressed back and thereby also the movable tool 2. The distance between the movable tool 2 and the lower part of the housing 3 has increased to $L_2$. As a consequence of the first piston 7 partly being pushed out from the second chamber 5, the pressure will decrease in the second chamber 5. Finally, the pressure will decrease to the original pressure level in the second chamber 5. The original pressure level will however be maintained by opening of the second non return valve 11, if the pressure in the second chamber 5 would ever fall below the original pressure level. The second chamber 5 is connected, via the second non return valve 11, to a source of pressurized hydraulic liquid, suitably hydraulic oil. Hence, the pressure in the second chamber 5 will continue to force the pistons 7, 17 and the movable tool 2 to return.

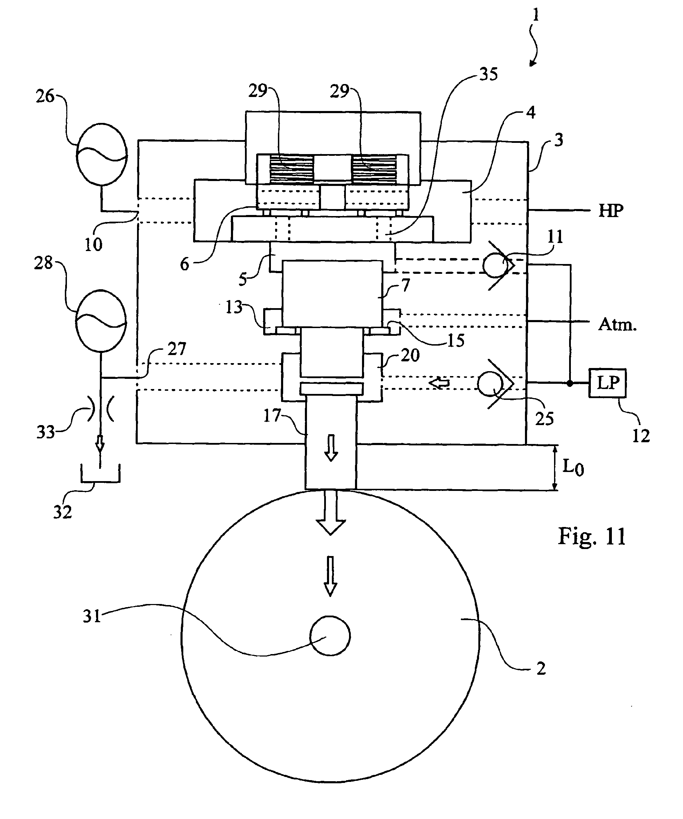

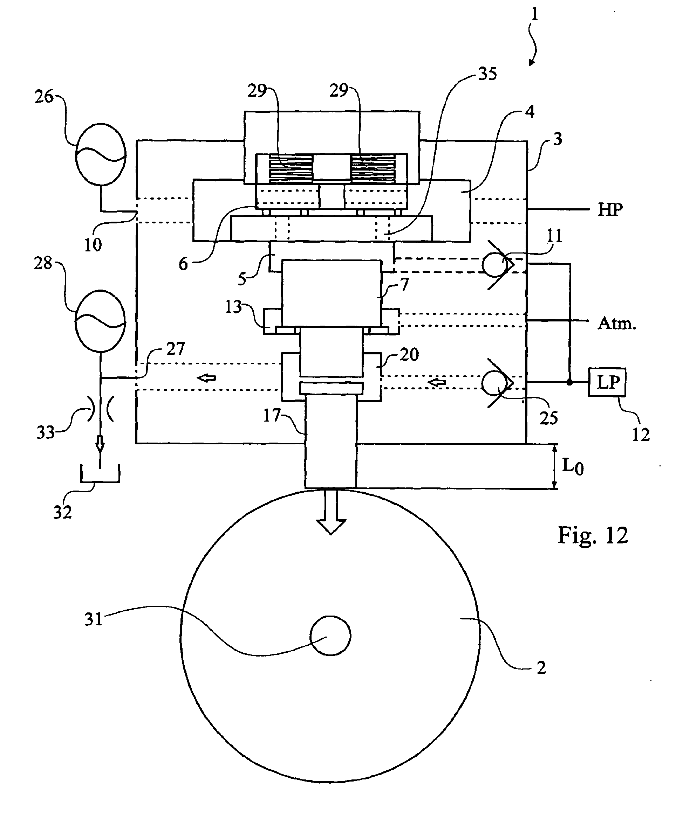

Fig. 11 shows the situation at an even later time point, the time point $t_7$ that is later than the time point $t_6$. The movement of the first piston 7 has now been stopped, by it having met the limiting surface area 30. The second piston 17 and the movable tool 2 will however continue to move, partly due to inertia. Hence, the second piston 17 will lose contact with the first piston 7. The pressurized hydraulic liquid in the fourth chamber 20 may then act on the upper limiting surface area 23 of the second piston, whereby it presses the piston 17 and the tool 2 downwards. The piston 7 will not be pressed upwards, since the upper surface area 24 of the piston 7 is larger than the lower surface area 22 of the piston 7, while the pressure is the same in the chambers 5, 20. It is realised of course that the relation between the surface areas 22, 24 is not decisive as such to the relation between the upwards acting and the downwards acting force. What is decisive is the product of pressure and surface area. If the pressure e.g. was higher in the second chamber 5 than in the fourth chamber 20, the surface areas 22, 24 could be equal and the function would still be the same. In conjunction with this, the volume in the fourth chamber 20 increases somewhat and hence the pressure would decrease if no new pressurized hydraulic liquid was supplied. Oil is added primarily from the accumulator 26, and only the oil that flows out via the throttling 33 needs to be replaced via the non return valve 25. By the third non return valve 25, the fourth chamber 20 is connected with a source 12 of pressurized hydraulic liquid, suitably the same source of pressurized hydraulic liquid that is connected to the second chamber 5. Fig. 11 shows how the third non return valve 25 is open at the time point $t_8$ that is later than $t_7$. The second non return valve 11 is however closed. Finally, Fig. 12 shows how the shock absorber has returned completely to its starting position $t_9$, which is later than the time point $t_8$. Also the third non return valve 25 is closed now (it should be understood however that the closing of the third non return valve 25 in this case normally is not complete, since the constant flow from the throttling 33 must be able to get in). The tool 2 can now make its next operating stroke. It should be understood that the above mentioned course of events is very fast, whereby in practice the operating stroke, the shock absorbing and the return of the tool may take as little as 2-10 milliseconds. Depending on the size of the machine, among other things, the time for the operating stroke, the shock absorbing and the return may however be larger. In some realistic cases, the total time of the operating stroke, the shock absorbing and the return may be between 100 and 500 milliseconds.

During the entire time that the first piston 7 is forced inwards in the second chamber 5, the force that acts on its upper end surface area 24 will slow down the movement of the movable tool. The force is the pressure times the area of the first piston's 7 upper end surface area 24.

$$(1) \qquad F = A*P$$

The consumed energy is the force times the distance that the tool moves (F in Newton and S in meters):

$$(2) \qquad W = F*S$$

Or:

$$(3) \qquad W = A*P*S$$

Furthermore, W = P*V, where P = pressure and V= displaced volume.

For a varying P:

$$(4) \qquad W = V \cdot \int_{0}^{T} P(t)dt$$

Before the non return valve 6 has risen, the pressure P in the second chamber 5 may be considerably higher than the pressure HP in the first chamber 4, but it will decrease to HP when the non return valve 6 has risen. At equilibrium, the overpressure inside and the flow out from the second chamber 5 are in harmony with the lifting height of the non return valve 6, and the system balances itself at a relatively constant pressure in the second chamber 5.

Embodiments are also conceivable in which the second chamber 5 is not connected to a source 12 of pressurized hydraulic liquid. In preferred embodiments of the invention, the second chamber 5 is however connected to a source of pressurized hydraulic liquid. Thereby, the advantage is attained that it is easier to return the system to its original position, after an operating stroke.

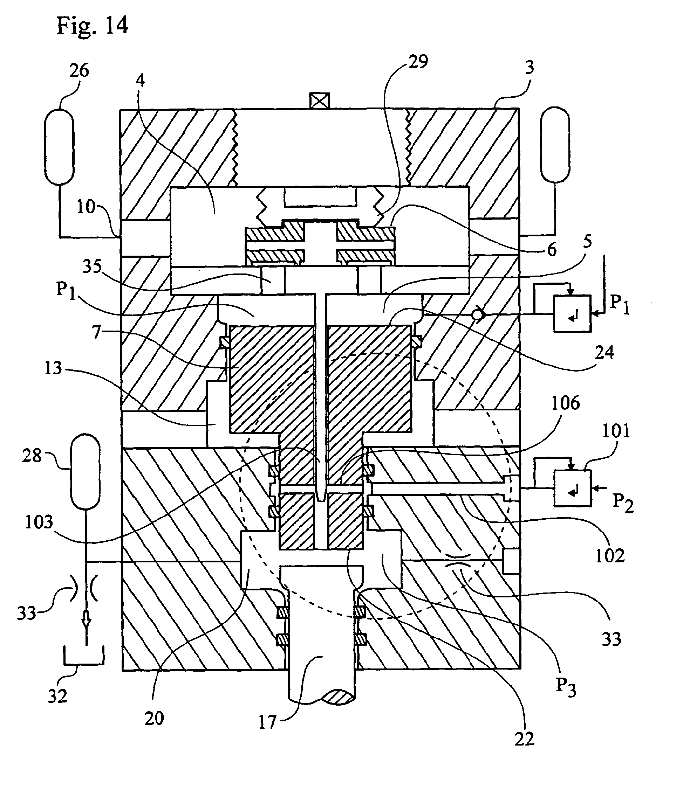

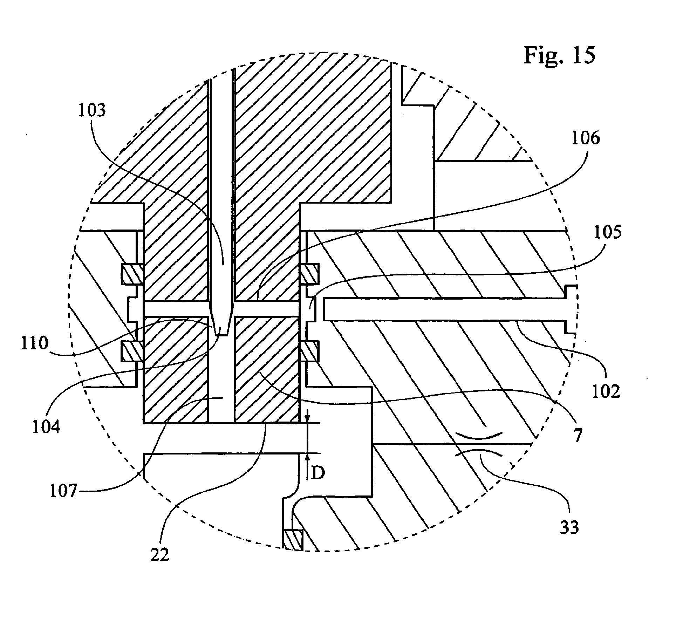

Referring to Figs. 14 and 15, another embodiment of the invention will now be described. Figs. 14 and 15 show that the first piston 7 has an axial channel 107, in which a needle 103 is arranged. The needle 103 is stationary arranged, preferably stationary arranged in relation to the housing 3. The needle 103 has a conical surface area 104 in one of its ends. At least one channel 102 is arranged inside the housing 3, and extends inwards to the first piston 7, to mouth in an annular chamber 105 inside the housing 3, which annular chamber 105 surrounds the first piston 7. One or more radial channels 106 inside the first piston 7 connect the annular chamber 105 with the axial channel 107 in the first piston 7. The embodiment shown in Figs. 14 and 15 aims at giving the possibility to vary the distance D, i.e. the distance that the second piston 17 must move before it gets in contact with the first piston 7 and the true braking begins. Figs. 14 and 15 show a stationary condition, or a starting position corresponding to the position in Fig. 3. The outer pressure $P_2$ is controlled by the pressure adjusting valve 101. The outer pressure $P_2$ will result in a flow of hydraulic liquid, such as oil, that reaches the annular chamber 105 via the channel 102 in the housing 3. From the chamber 105, the hydraulic liquid flows via the radial channel(s) 106 to a throttling 110 formed from the axial channel 107 and the needle 103 with its conical surface area 104. The pressure will fall from the higher level $P_2$ to the lower level $P_3$ when the hydraulic liquid passes through the throttling 110 via the channel 107, and out into the fourth chamber 20. From there, hydraulic liquid can continue to flow through the throttling 33, to a tank T. In order for the first piston 7 to be stationary, the pressure $P_3$ must be balanced by the pressure $P_1$ above the piston, such that:

$$P_1 A_1 = P_3 A_2.$$

Where $P_1$ = the pressure in the second chamber 5, $A_1$ = the area of the upper surface area 24 on the piston, $P_3$ = the pressure in the fourth chamber 20, and $A_2$ = the area 22 of the lower surface area 22 on the piston 7.

Then, there is equilibrium of forces for the first piston 7. If the piston 7 now moves "upwards" (upwards as seen in the drawings) from external influence, the open area of the variable throttling 110 will decrease and the flow through the throttling 110 will decrease. Thereby, the flow through the constant throttling 33 will decrease, whereby the pressure $P_3$ decreases. In turn, this will result in a downwards directed net force on the piston. Accordingly, the piston 7 will tend to be maintained in position. A force that is applied "upwards" will result in an increased force "downwards".

A variation of the distance D takes place in the following way. By increasing the pressure $P_2$, more hydraulic liquid will flow past the variable throttling 110, which in turn leads to an increase of the flow through the throttling 33. Then, the pressure $P_3$ will increase, which makes the first piston 7 move upwards in Fig. 15, such that the distance D increases. When the piston 7 moves upwards, the open area of the variable throttling 110 will decrease and the flow through the throttling 110 will decrease. The flow through the throttling 110 will decrease until the pressures $P_3$ and $P_1$ are once again balancing each other. Thereafter, the same flow as before can be assumed to pass through the variable throttling 110, but at a larger pressure drop over the throttling 110, since its open area has decreased because $P_3$ is formed from the flow through the throttling 33 and $A_1 P_1 = A_2 P_3$, just as before.

In all the embodiments described above, it can be assumed that the braking force is essentially constant once the first non return valve 6 has been opened.

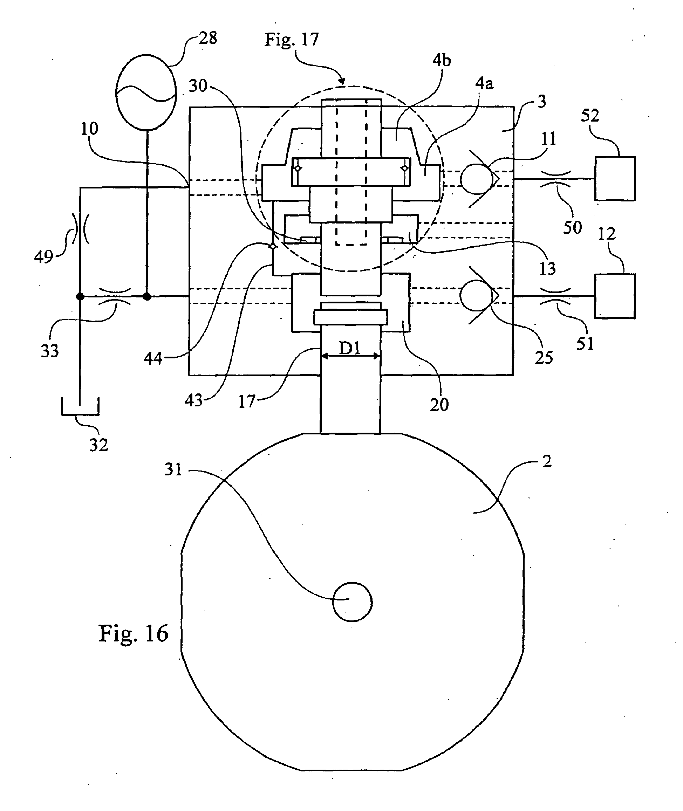

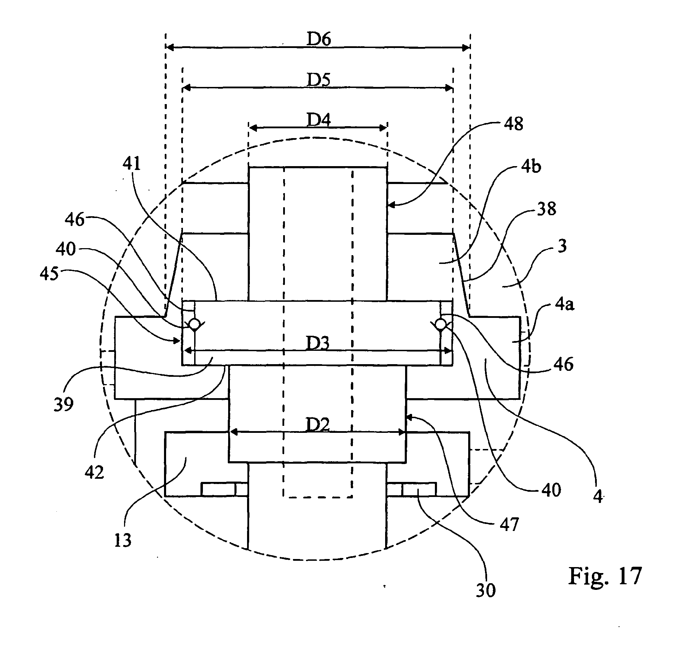

Yet another embodiment will now be described with reference to Figs. 16 and 17. In the embodiment according to Figs. 16 and 17, variants are conceivable in which equal pressure and or essentially equal pressure exists in the two chambers 4 and 20. Embodiments are also conceivable in which there is a higher pressure in the first chamber 4 and a lower pressure in the lower chamber 20. Fig. 16 shows schematically that the first or upper chamber 4 has a separate source 52 of pressurized hydraulic liquid; while the lower chamber 20 (corresponding to the fourth chamber 20 in Fig. 3) has a separate source 12 of hydraulic liquid. The source 52 of hydraulic liquid can be arranged to supply hydraulic liquid at a high pressure, such as 10-30 MPa, while the source 12 of pressurized hydraulic liquid can be arranged to supply hydraulic liquid at a lower pressure, such as 1-5 MPa. It should be realised however that in the embodiment in Fig. 16, the sources 12 and 52 of hydraulic liquid can be arranged to supply hydraulic liquid at equal pressure. It is also conceivable that the source 52 of hydraulic liquid is eliminated and the source 12 of hydraulic liquid is connected to both chambers 4, 20. In the embodiment shown in Figs. 16 and 17, the first chamber 4 has been divided into an upper part 4b and a lower part 4a (it should be understood in this connection that "upper" and "lower", respectively, and "upwards" and "downwards" respectively, refers to that which is shown in the drawings to be "upper" and "lower" parts, respectively. The "upper" part 4b could also be referred to as a "distal" part and the "lower" part as a "proximal" part, in relation to e.g. the ram tool 2 or in relation to the end of the piston 7 or one or some of the other chambers). In Figs. 16 and 17, the upper chamber part 4b is narrowing in the upwards direction by being limited by a wall 38 that narrows in the upwards direction, such as a conical wall 38. The function of this embodiment is not based on such a non return valve 6 with an associated spring element 29 that is shown in the embodiments according to Figs. 1-15. Instead, the first piston 7 is arranged to extend into the first chamber 4. In this embodiment, the first piston 7 is provided with a collar 39. The collar 39 has an upper surface area 41 that faces the upper chamber part or the subchamber 4b, and a lower surface area 42 that faces the lower chamber part 4a. The lower surface area 42 is smaller than the upper surface area 41. As in the previous embodiments, the first piston 7 is preferably cylindrical and also its collar 39 is preferably cylindrical. Figs. 16 and 17 show that the cylindrical wall 45 of the collar 39 extends from the lower chamber part 4a and into the upper chamber part 4b. Then, a narrow gap forms between the wall 45 of the collar 39 and the conical wall 38. Preferably, one or more channels 46 pass through the collar 39. In preferred embodiments, there is a one-way valve 40 in the channel(s) 46, which one-way valve 40 is arranged to allow for a flow through the channel(s) 46, from the lower chamber part 4a to the upper chamber part 4b, but to counteract or prevent a flow through the channel (s) 46 in a direction from the upper chamber part 4b to the lower chamber part 4a. The part 7a of the piston 7 that in Figs. 16 and 17 is positioned below the collar 39 is arranged to slide in an opening 47 in the housing 3, having a certain length and thereby being able to act as a guide for the first piston 7. The part 7b of the piston 7 that in Figs. 16 and 17 is positioned above the collar 39 is narrower than the part of the piston 7 that is positioned below the collar 7. For example, it may have a diameter D4 that is less than the diameter D2 of the part of the piston 7 that is positioned below the collar 39. The upper and narrower part 7b of the piston 7 is arranged to slide in an opening 48 in the housing 3, which opening 48 is of a certain length and acts as an upper guide for the piston 7. Fig. 17 shows The embodiment according to Figs. 16 and 17 works according to the following. A blow from the tool 2 will reach the first piston 7, optionally via a second piston 17. The first piston 17 will then move inwards in the chamber 4. The upper and narrower part 7b of the piston 7 will start to leave the first chamber 4 at the same time as the piston part 7a with a larger diameter D2 will start to penetrate into the chamber 4. This requires that hydraulic liquid is pushed away, and hence the piston's 7 movement will meet a resistance that results in shock absorbing. At the same time, the collar 39 will penetrate into the upper chamber part 4b, which leads to hydraulic liquid being pressed from the upper chamber part 4b to the lower chamber part 4a, via the gap between the collar 39 and the conical wall 38. Since the wall 38 is narrowing, the gap between the collar 39 and the wall 38 will however start to decrease as the collar 39 penetrates further into the upper chamber part 4b. Thereby, the resistance and the shock absorbing will increase progressively. When all the energy from the blow has been absorbed, the first piston 7 will be in an upper (or distal) position. The pressure is equal on both sides of the collar 39, but the upper surface area 41 on the collar 39 is larger than the lower surface area 42, since the diameter D2 of the lower piston part is larger than the diameter D4 of the upper piston part. Hence, the force on the upper surface area 41 will exceed the force that acts in the opposite direction on the lower surface-area 42. Hence, the piston 7 will be pressed back in the direction towards its starting position. During the return movement, the hydraulic liquid will also be able to flow through the channel or channels 46 in the collar 39, since the one-way valve (or one-way valves) 40 will allow for this. Hydraulic liquid can however not flow through the channel or channels 46 when the collar 39 moves upwards in Fig. 17 (in the upper chamber part 4b). By hydraulic liquid (preferably oil) being able to flow not only through the gap between the collar 39 and the conical wall 38, but also through the channel or channels 46, the return movement is facilitated such that it can be faster.

In this embodiment (if the pressure is equal in chambers 4 and 20), there can, as shown in Fig. 16, be a conduit from the first chamber 4 to the chamber 20 that in this embodiment corresponds to the fourth chamber 20 in the embodiment according to Figs. 3-13. Fig. 16 shows that a non return valve or a one-way valve 44 is situated in the conduit 43. In case very high pressures, "pressure peaks", temporarily would arise in the first chamber 4, there is a risk that such pressure peaks in some cases could have negative effects on various parts of the system. In such cases, the conduit 43 allows for the chamber 4 to a certain extent being relieved by the chamber 20. The non return valve 44 will however prevent hydraulic liquid (such as oil) from flowing from chamber 20 to the first chamber 4. If the conduit 43 interconnects chambers 4 and 20, hydraulic liquid from the first chamber 4 can also be received by the accumulator 28 that is connected to the outlet for the chamber 20. It should be realised however that the first chamber 4 could be connected, via the outlet 10, to an accumulator 26 of its own, in the same way as is shown in e.g. Fig. 5. Such an accumulator 26 could then operate and be employed in exactly the same way as the accumulator 26 in the embodiment according to Figs. 3-13. Fig. 16 however shows a variant in which the outlet 10 of the first chamber 4 via a throttling 49 leads to a tank 32 for accumulation of hydraulic liquid. If the non return valve(s) 43 were missing, the pressing in of the second piston 17 in the chamber 20 could give rise to an increase in pressure in the first chamber 4, which could effect the first piston 7 in a direction downwards, which should be avoided.

In the embodiment according to Figs. 16 and 17, the downwards movement by the piston 7 could be limited by a spacing ring 30 e.g. It should be realised that in the embodiment shown in Fig. 16, the chamber 13 is suitably a chamber filled with gas (such as air), which gas is preferably of atmospheric pressure or at least has a lower pressure than the pressure in the first chamber 4.

The invention described in the present patent application is a passive shock absorber. It is hydraulic and self-adjusting. It is able to absorb essentially all energy from the blow in order to store it as potential energy to be used in other parts of the machine, primarily for the acceleration of the ram.

By the invention, the advantage is attained that the movement of the movable tool can be slowed down in a manner that absorbs essentially all the energy from the blow. Moreover, the invention provides the possibility of efficient return of the tool. By using two pistons that are initially separated from each other, the advantage is attained that the movement of the tool is initially slowed down very little. By using accumulators, the advantage is among other things attained that energy recovered from the blow could be used for a new blow.

It should be realised that the invention can be defined also in terms of a method of shock absorbing a blow onto a movable tool, whereby the method consists of the steps following naturally from the use of the shock absorber according to the invention, independent of if such steps have been explicitly mentioned or not.

It should also be understood that the invention can be defined in terms of a structure comprising a movable tool and a shock absorber.

It should be realised that the various principles for shock absorbing shown in the embodiments, can be used independent of if the shock absorber is arranged to return the piston(s) or not. Accordingly, the principle of progressive shock absorbing shown in Figs. 16 and 17 could be used also if the two surface areas 41, 42 of the collar 39 were equal. A separate device could then be arranged for the return movement. By such an arrangement, it would be possible efficiently to absorb the energy of the blow even if the problem relating to the return movement would not be solved.

It should be realised that the idea of using two pistons 7, 17 that are initially separated from each other, could be used independent of how the shock absorber is otherwise designed.

It should also be realised that the concept of using a pressure accumulator to handle the energy from a blow in order then to be able to use the movable tool - or some other tool - can be used also for other types of shock absorbers than the ones shown in the above described embodiments.

**Claims**

1. A shock absorber (1) for machines having a movable tool (2), which shock absorber (1) comprises:

   a) a housing (3) with a first chamber (4) filled with a pressurized Hydraulic liquid, and
   b) at least one first piston (7) that is movably arranged inside the housing (3) and is arranged in a first end (8) thereof to be able to receive a blow from a movable tool (2) and by its motion to transmit kinetic energy from the blow to the hydraulic liquid in the first chamber (4), and
   c) means (4b, 22, 24, 38, 39, 41) for returning the first piston (7) to its starting position, after the blow, such that the first piston (7) is able to receive a new blow, the means for returning the first piston (7) comprising a chamber (4, 5) with a pressurized hydraulic liquid that acts on a surface area (24, 41) of the first piston (7) in such a direction that the first piston (7) is pressed in a direction towards its starting position, **characterised in that** the first piston (7) is provided with at least one stop (14) arranged to meet a limiting surface area in the housing (3), such that the piston's (7) movement is limited in a direction opposite the direction of the blow in such a way that the first piston (7) reaches a proximal end position, as seen in relation to the movable tool (2), when the stop (14) of the first piston (7) meets said limiting surface area (15), **in that** the shock absorber comprises a second piston (17) arranged to be movable in the housing (3), and where the second piston (17) is arranged at a first end (18) thereof to get in direct contact with the movable tool (2) and at a second end (19) thereof to face the first end (8) of the first piston (7), such that a blow from the movable tool can be transmitted to the first piston (7) via the second piston (17) and **in that**, when the first piston (7) is in its end position which is proximal in relation to the movable tool (2), **in that** the first end (8) of the first piston (7) and the second end (19) of the second piston (17) both extend into a common chamber (20) in the housing (3) which common chamber (20) is filled with a pressurized hydraulic liquid and wherein the shock absorber is so designed that, in a starting position for the shock absorber, a gap (D) may exist between the first end (8) of the first piston (7) and the second end (19) of the second piston, such that the second piston (17) must move a certain distance (D) before it is able to transmit a blow from the movable tool (2) to the first piston (7).

2. A shock absorber according to claim 1, **characterised in that** the first piston (7) is arranged with its ends positioned in different chambers (5, 20), the surface areas (24, 22) of the piston's (7) ends and the pressure in the two chambers (5, 20) being chosen such that a resulting force acts to return the first piston (7) to its starting position.

3. A shock absorber (1) according to claim 2, **characterised in that** the two chambers (5, 20) are connected to a source (12) of pressurised hydraulic liquid, which is in common for the two chambers (5, 20), and that a distal end of the first piston (7), as seen in the direction of the blow, has a larger surface area (24), while a proximal end of the first piston (7), as seen in the direction of the blow, has a smaller surface area (22), such that the resulting compressive force from the hydraulic liquid strives to return the first piston (7).

4. A shock absorber according to claim 1, **characterised in that** the first chamber (4) is divided into a subchamber (4b) that is distal in relation to the first end of the piston, and a subchamber (4a) that is proximal in relation to the first end of the first piston (7), and **in that** said means for returning the first piston (7) to its starting position after the blow comprises a collar (39) on the first piston (7), which collar has a distal surface area (41) and a proximal surface area (42), which proximal surface area (42) is smaller than the distal surface area (41).

5. A shock absorber (1) according to claim 1, **characterised in that** the housing (3) of the shock absorber is provided with a second chamber (5) filled with a pressurized hydraulic liquid, which second chamber (5) is connected to the first chamber (4) via a first non return valve (6) arranged to open when the pressure in the second chamber (5) is greater than the pressure in the first chamber (4), that the second end (9) of the first piston is positioned in the second chamber (5), such that a blow from a movable tool (2) can make said first piston (7) move inwards into the second chamber (5), thereby to increase the pressure in the second chamber (5) to a level at which the first non return valve (6) opens, such that pressurized hydraulic liquid starts to flow from the second chamber (5) to the first chamber (4), and the first chamber (4) having an outlet (10) arranged to allow for inflow and outflow of hydraulic liquid, to and from, respectively, the first chamber (4).

6. A shock absorber (1) according to claim 5, **characterised in that** the second chamber (5) is connected, via a second non return valve (11), to a source (12) of a pressurized hydraulic liquid, such that the second non return valve (11) opens when the pressure in the second chamber (5) is below a predetermined level.

7. A shock absorber (1) according to claim 6, **characterised in that** the housing (3) is provided with a third chamber (13) and **in that** the limiting surface area (15) is a surface area within the third chamber.

8. A shock absorber according to claim 7, **characterised in that** the third chamber (13) is a gas filled chamber (13) in which the pressure preferably is the same as the atmospheric pressure.

9. A shock absorber (1) according to claim 1, **characterised in that** the second end (19) of the second piston (17) and the first end (8) of the first piston have planar surface areas (22, 23) that are parallel to each other and which end surface areas (22, 23) are preferably of equal size.

10. A shock absorber (1) according to claim 9, **characterised in that** the fourth chamber (20) is connected, via a third non return valve (25), to a source (12) of a pressurized hydraulic liquid, such that the third non return valve (25) opens when the pressure in the fourth chamber (20) is below a predetermined level.

11. A shock absorber according to claim 10, **characterised in that** the second chamber (5) and the fourth chamber (20) are connected to the same source (12) of pressurized hydraulic liquid.

12. A shock absorber (1) according to claim 6, **characterised in that** the outlet (10) of the first chamber (4) is connected to an accumulator (26) for hydraulic liquid.

13. A shock absorber (1) according to claim 1, **characterised in that** the fourth chamber (20) has an outlet (27) arranged to let out hydraulic liquid when the pressure in the fourth chamber (20) exceeds a predetermined level.

14. A shock absorber (1) according to claim 13, **characterised in that** the outlet (27) of the fourth chamber (20) is connected to an accumulator (28) for hydraulic liquid.

15. A shock absorber according to claim 6, **characterised in that** the first non return valve (6) is loaded by at least one elastic element (29) that presses the first non return valve (6) towards a closed position.

**Patentansprüche**

1. Stossdämpfer (1) für Maschinen mit einem beweglichen Werkzeug (2), wobei der Stossdämpfer aufweist:

a) ein Gehäuse (3) mit einer ersten Kammer (4), gefüllt mit einer unter Druck stehenden, hydraulischen Flüssigkeit, und
b) zumindest einem ersten Kolben (7), der beweglich im Inneren des Gehäuses (3) angeordnet ist und in einem ersten Ende davon angeordnet ist, um dazu geeignet zu sein, einen Stoss von einem beweglichen Werkzeug (2) zu erhalten und durch seine Bewegung kinetische Energie von dem Stoss an die hydraulische Flüssigkeit in der ersten Kammer (4) zu übertragen, und
c) Mittel (4b, 22, 24, 38, 39, 41), um den ersten Kolben (7) nach dem Stoss zu seiner Ausgangsposition zurückzuführen, so dass der erste Kolben (7) dazu geeignet ist, einen neuen Stoss zu erhalten, wobei die Mittel zum Zurückführen des ersten Kolbens (7) eine Kammer (4, 5) mit einer unter Druck stehenden hydraulischen Flüssigkeit umfassen, welche auf einem Oberflächenbereich (24, 41) des ersten Kolbens (7) in einer derartigen Richtung tätig ist, dass der erste Kolben (7) in eine Richtung zu seiner Ausgangsposition gedrückt wird, **dadurch gekennzeichnet, dass** der erste Kolben (7) mit zumindest einem Anschlag (14) versehen ist, der angeordnet ist, um derart an einen begrenzenden Oberflächenbereich in dem Gehäuse (3) zu stossen, dass die Bewegung des Kolbens (7) in einer Richtung entgegengesetzt der Richtung des Stosses auf eine Weise begrenzt ist, dass der erste Kolben eine proximale Endposition, in Bezug auf das bewegliche Werkzeug (2) gesehen, erreicht, wenn der Anschlag (14) des ersten Kolbens (7) an den begrenzenden Oberflächenbereich (15) anstösst, dass der Stossdämpfer einen zweiten Kolben (17) umfasst, der beweglich in dem Gehäuse (3) angeordnet ist, und wobei der zweite Kolben (17) an einem ersten Ende (18) davon angeordnet ist, um in direkten Kontakt mit dem beweglichen Werkzeug (2) zu gelangen und an einem zweiten Ende (19) davon dem ersten Ende (8) des ersten Kolbens (7) derart gegenüber zu stehen, dass ein Stoss von dem beweglichen Werkzeug mittels des zweiten Kolbens (17) an den ersten Kolben (7) übertragen werden kann, und dass, wenn sich der erste Kolben (7) in seiner Endposition befindet, welche proximal in Bezug auf das bewegliche Werkzeug (2) ist, sich sowohl das erste Ende (8) des ersten Kolbens (7) als auch das zweite Ende (19) des zweiten Kolbens (17) in eine gemeinsame Kammer (20) in dem Gehäuse (3) hinein erstrecken, wobei die gemeinsame Kammer (20) mit einer unter Druck stehenden hydraulischen Flüssigkeit gefüllt ist, und wobei der Stossdämpfer derart gestaltet ist, dass in einer Ausgangsposition des Stossdämpfers ein derartiger Spalt (D) zwischen dem ersten Ende (8) des ersten Kolbens (7) und dem zweiten Ende (19) des zweiten Kolbens vorhanden sein kann, dass sich der zweite Kolben (17) um einen gewissen Abstand (D) bewegen muss, bevor er dazu geeignet ist, einen Stoss von dem beweglichen Werkzeug (2) zu dem ersten Kolben (7) zu übertragen.

2. Stossdämpfer gemäß Anspruch 1, **dadurch gekennzeichnet, dass** der erste Kolben (7) mit seinen Enden in verschiedenen Kammern (5, 20) positioniert angeordnet ist, wobei die Oberflächenbereiche (24, 22) der Enden des Kolbens (7) und der Druck in den zwei Kammern (5, 20) derart ausgewählt ist, dass eine resultierende Kraft tätig ist, um den ersten Kolben (7) zu seiner Ausgangsposition zurückzuführen.

3. Stossdämpfer (1) gemäß Anspruch 2, **dadurch gekennzeichnet, dass** die zwei Kammern (5, 20) mit einer Quelle (12) von unter Druck stehender hydraulischer Flüssigkeit verbunden sind, welche gemeinsam für die zwei Kammern (5, 20) ist, und dass ein distales Ende des ersten Kolbens (7), gesehen in Richtung des Stosses, einen größeren Oberflächenbereich (24) aufweist, während ein proximales Ende des ersten Kolbens (7), gesehen in der Richtung des Stosses, einen kleineren Oberflächenbereich (22) aufweist, so dass die resultierende Kompressionskraft der hydraulischen Flüssigkeit bestrebt ist, den ersten Kolben (7) zurückzuführen.

4. Stossdämpfer gemäß Anspruch 1, **dadurch gekennzeichnet, dass** die erste Kammer (4) geteilt ist in eine Unterkammer (4b), welche distal in Bezug auf das erste Ende des Kolbens ist, und eine Unterkammer (4a), welche proximal in Bezug auf das erste Ende des ersten Kolbens (7) ist, und dass die Mittel zum Zurückführen des ersten Kolbens (7) in seine Ausgangsposition nach dem Stoss einen Kragen (39) an dem ersten Kolben (7) umfassen, wobei der Kragen einen distalen Oberflächenbereich (41) und einen proximalen Oberflächenbereich (42) aufweist, wobei der proximale Oberflächenbereich (42) kleiner ist als der distale Oberflächenbereich (41).

5. Stossdämpfer (1) gemäß Anspruch 1, **dadurch gekennzeichnet, dass** das Gehäuse (3) des Stossdämpfers mit einer zweiten Kammer (5), gefüllt mit einer unter Druck stehenden hydraulischen Flüssigkeit, versehen ist, wobei die zweite Kammer (5) mit der ersten Kammer (4) verbunden ist mittels einer ersten Rückschlagklappe (6), welche angeordnet ist, um sich zu öffnen, wenn der Druck in der zweiten Kammer (5) größer ist als der Druck in der ersten Kammer (4), dass das zweite Ende (9) des ersten Kolbens in der zweiten Kammer (5) derart positioniert ist, dass ein Stoss von dem beweglichen Werkzeug (2) den ersten Kolben (7) dazu bringen kann, sich nach innen in die zweite Kammer (5) zu bewegen, wodurch der Druck in der zweiten Kammer (5) auf ein Niveau erhöht wird, bei welchem sich die erste Rückschlagklappe (6) öffnet, so dass die unter Druck stehende, hydraulische Flüssigkeit anfängt, von der zweiten Kammer (5) zu der ersten Kammer (4) zu fließen, und wobei die erste Kammer (4) einen Auslass (10) aufweist, welcher angeordnet ist, um das Einströmen und Ausströmen von hydraulischer Flüssigkeit zu und entsprechend von der ersten Kammer (4) zu ermöglichen.

6. Stossdämpfer (1) gemäß Anspruch 5, **dadurch gekennzeichnet, dass** die zweite Kammer (5) mittels einer zweiten Rückschlagklappe (11) mit einer Quelle (12) von unter Druck stehender hydraulischer Flüssigkeit verbunden ist, so dass sich die zweite Rückschlagklappe (11) öffnet, wenn der Druck in der zweiten Kammer (5) unter einem vorbestimmten Niveau ist.

7. Stossdämpfer (1) gemäß Anspruch 6, **dadurch gekennzeichnet, dass** das Gehäuse (3) mit einer dritten Kammer (13) versehen ist und dass der begrenzende Oberflächenbereich (15) ein Oberflächenbereich innerhalb der dritten Kammer ist.

8. Stossdämpfer gemäß Anspruch 7, **dadurch gekennzeichnet, dass** die dritte Kammer (13) eine mit Gas gefüllte Kammer (13) ist, in welcher der Druck vorzugsweise mit dem atmosphärischen Druck gleich ist.

9. Stossdämpfer (1) gemäß Anspruch 1, **dadurch gekennzeichnet, dass** das zweite Ende (19) des zweiten Kolbens (17) und das erste Ende (8) des ersten Kolbens ebene Oberflächenbereiche (22, 23) aufweisen, welche parallel zueinander sind und deren Endoberflächenbereiche (22, 23) vorzugsweise von gleicher Größe sind.

10. Stossdämpfer (1) gemäß Anspruch 9, **dadurch gekennzeichnet, dass** die vierte Kammer (20) mittels einer dritten Rückschlagklappe (25) mit einer Quelle (12) von unter Druck stehender hydraulischer Flüssigkeit verbunden ist, so dass die dritte Rückschlagklappe (25) sich öffnet, wenn der Druck in der vierten Kammer (20) unter einem vorbestimmten Niveau ist.

11. Stossdämpfer gemäß Anspruch 10, **dadurch gekennzeichnet, dass** die zweite Kammer (5) und die vierte Kammer (20) mit der gleichen Quelle (12) von unter Druck stehender hydraulischer Flüssigkeit verbunden sind.

12. Stossdämpfer (1) gemäß Anspruch 6, **dadurch gekennzeichnet, dass** der Auslass (10) der ersten Kammer (4) mit einem Akkumulator (26) für hydraulische Flüssigkeit verbunden ist.

13. Stossdämpfer (1) gemäß Anspruch 1, **dadurch gekennzeichnet, dass** die vierte Kammer (20) einen Auslass (27) aufweist, welcher angeordnet ist, um hydraulische Flüssigkeit auszulassen, wenn der Druck in der vierten Kammer (20) ein vorbestimmtes Niveau überschreitet.

14. Stossdämpfer (1) gemäß Anspruch 13, **dadurch gekennzeichnet, dass** der Auslass (27) der vierten Kammer (20) mit einem Akkumulator (26) für hydraulische Flüssigkeit verbunden ist.

15. Stossdämpfer gemäß Anspruch 6, **dadurch gekennzeichnet, dass** die erste Rückschlagklappe (6) durch zumindest ein elastisches Element (29) beladen wird, welches die erste Rückschlagklappe (6) in eine geschlossene Richtung drückt.

**Revendications**

1. Amortisseur (1) pour machines comportant un outil mobile (2), lequel amortisseur (1) comprend :

   a) un logement (3) incluant une première chambre (4) remplie d'un liquide hydraulique sous pression, et
   b) au moins un premier piston (7) qui est agencé de manière mobile à l'intérieur du logement (3) au niveau d'une première extrémité (8) de celui-ci pour être apte à recevoir un coup par un outil mobile (2) et, par son mouvement, à transmettre l'énergie cinétique du coup reçu au liquide hydraulique dans la première chambre (4), et
   c) des moyens (4b, 22, 24, 38, 39, 41) aptes à renvoyer le premier piston (7) dans sa position de départ après avoir été frappé, de sorte que le premier piston (7) est apte à recevoir un nouveau coup, les moyens de renvoi du premier piston (7) comprenant une chambre (4, 5) contenant un liquide hydraulique pressurisé qui agit sur une surface (24, 41) du premier piston (7) dans une direction telle que le premier piston (7) est poussé dans une direction correspondant à sa position de départ, **caractérisé en ce que** le premier piston (7) est équipé d'au moins une butée (14) agencée pour venir rencontrer une surface de délimitation dans le logement (3), de sorte que le mouvement du piston (7) est limité dans une direction opposée à la direction du coup reçu, de telle manière que le premier piston (7) atteint une position proximale d'extrémité, telle que vue par rapport à l'outil mobile (2), lorsque la butée (14) du premier piston (7) rencontre ladite surface de délimitation (15), **en ce que** l'amortisseur comprend un deuxième piston (17) agencé de manière à être mobile dans le logement (3), le deuxième piston (17) étant agencé au niveau d'une première extrémité (18) de celui-ci pour venir en contact direct avec l'outil mobile (2), et au niveau d'une deuxième extrémité (19) de celui-ci pour venir en regard de la première extrémité (8) du premier piston (7), de sorte qu'un coup reçu par l'outil mobile peut être transmis au premier piston (7) par l'intermédiaire du deuxième piston (17), et **en ce que**, lorsque le premier piston (7) est dans sa position de fin de course qui est proximale par rapport à l'outil mobile (2), la première extrémité (8) du premier piston (7) et la deuxième extrémité (19) du deuxième piston (17) s'étendent toutes deux dans une chambre commune (20) du logement (3), laquelle chambre commune (20) est remplie d'un liquide hydraulique pressurisé et l'amortisseur est conçu de telle sorte que, dans une position de départ de l'amortisseur, un espace (D) peut exister entre la première extrémité (8) du premier piston (7) et la deuxième extrémité (19) du deuxième piston, de sorte que le deuxième piston (17) doit se déplacer sur une certaine distance (D) avant de pouvoir transmettre un coup reçu par l'outil mobile (2) au premier piston (7).

2. Amortisseur selon la revendication 1, **caractérisé en ce que** le premier piston (7) est agencé de telle sorte que ses extrémités sont positionnées dans différentes chambres (5, 20), les surfaces (24, 22) des extrémités du piston (7) et la pression dans les deux chambres (5, 20) étant choisies de sorte qu'une force résultante agit de manière à renvoyer le premier piston (7) dans sa position de départ.

3. Amortisseur (1) selon la revendication 2, **caractérisé en ce que** les deux chambres (5, 20) sont reliées à une source (12) de liquide hydraulique pressurisé, qui est commune aux deux chambres (5, 20), et **en ce qu'**une extrémité distale du premier piston (7), telle que vue dans la direction du coup reçu, a une surface (24) d'aire supérieure à une extrémité proximale du premier piston (7), telle que vue dans la direction du coup reçu, ayant une surface (22) d'aire inférieure, de sorte que la force de compression résultante du liquide hydraulique force le renvoi du premier piston (7).

4. Amortisseur selon la revendication 1, **caractérisé en ce que** la première chambre (4) est divisée en une sous-chambre (4b) qui est distale par rapport à la première extrémité du piston, et une sous-chambre (4a) qui est proximale par rapport à la première extrémité du premier piston (7), et en ce lesdits moyens de renvoi du premier piston (7) dans sa position de départ après avoir reçu le coup comprend une bague (39) agencée sur le premier piston (7), de sorte que la bague a une surface distale (41) et une surface proximale (42), l'aire de la surface proximale (42) étant inférieure à celle de la surface distale (41).

5. Amortisseur (1) selon la revendication 1, **caractérisé en ce que** le logement (3) de l'amortisseur est équipé d'une deuxième chambre (5) remplie d'un liquide hydraulique pressurisé, laquelle deuxième chambre (5) est reliée à la première chambre (4) par l'intermédiaire d'un premier clapet anti-retour (6) agencé pour s'ouvrir lorsque la pression dans la deuxième chambre (5) est plus élevée que la pression dans la première chambre (4), **en ce que** la deuxième extrémité (9) du premier piston est positionnée dans la deuxième chambre (5), de sorte qu'un coup reçu par un outil mobile (2) peut permettre le déplacement dudit premier piston (7) à l'intérieur de deuxième chambre (5), permettant ainsi d'augmenter la pression dans la deuxième chambre (5) jusqu'à un niveau tel que le premier clapet anti-retour (6) peut s'ouvrir, de sorte que le liquide hydraulique pressurisé commence à circuler de la deuxième chambre (5) jusque dans la première chambre (4), et la première chambre (4) comprenant une sortie (10) agencée pour permettre respectivement une entrée du liquide hydraulique jusqu'à la première chambre (4) et une sortie de celui-ci par ladite première chambre..

6. Amortisseur (1) selon la revendication 5, **caractérisé en ce que** la deuxième chambre (5) est reliée, par l'intermédiaire d'un deuxième clapet anti-retour (11), à une source (12) de liquide hydraulique pressurisé, de sorte que le deuxième clapet anti-retour (11) s'ouvre lorsque la pression dans la deuxième chambre (5) est inférieure à un niveau prédéterminé.

7. Amortisseur (1) selon la revendication 6, **caractérisé en ce que** le logement (3) est équipé d'une troisième chambre (13) et **en ce que** la surface de délimitation (15) est une surface inclue dans la troisième chambre.

8. Amortisseur selon la revendication 7, **caractérisé en ce que** la troisième chambre (13) est une chambre (13) remplie par un gaz dans laquelle la pression est de préférence la même que la pression atmosphérique.

9. Amortisseur (1) selon la revendication 1, **caractérisé en ce que** la deuxième extrémité (19) du deuxième piston (17) et la première extrémité (8) du premier piston ont des surfaces coplanaires (22, 23) qui sont parallèles l'une à l'autre, lesquelles surfaces d'extrémité (22, 23) étant de préférence d'aire égale.

10. Amortisseur (1) selon la revendication 9, **caractérisé en ce que** la quatrième chambre (20) est relié, par l'intermédiaire d'un troisième clapet anti-retour (25), à une source (12) de liquide hydraulique pressurisé, de sorte que le troisième clapet anti-retour (25) s'ouvre lorsque la pression dans la quatrième chambre (20) est inférieure à un niveau prédéterminé.

11. Amortisseur selon la revendication 10, **caractérisé en ce que** la deuxième chambre (5) et la quatrième chambre (20) sont reliées à la même source (12) de liquide hydraulique pressurisé.

12. Amortisseur (1) selon la revendication 6, **caractérisé en ce que** la sortie (10) de la première chambre (4) est reliée à un accumulateur (26) pour liquide hydraulique.

13. Amortisseur (1) selon la revendication 1, **caractérisé en ce que** la quatrième chambre (20) a une sortie (27) agencée pour laisser s'échapper le liquide hydraulique lorsque la pression dans la quatrième chambre (20) dépasse un niveau prédéterminé.

14. Amortisseur (1) selon la revendication 13, **caractérisé en ce que** la sortie (27) de la quatrième chambre (20) est reliée à un accumulateur (28) pour liquide hydraulique.

15. Amortisseur selon la revendication 6, **caractérisé en ce que** le premier clapet anti-retour (6) est chargé par au moins un élément élastique (29) qui contraint le premier clapet anti-retour (6) dans une position de fermeture.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

103

106

105

110

104

102

107

22

D

7

33

Fig. 16

Fig. 17

**EP 1 863 605 B1**

## REFERENCES CITED IN THE DESCRIPTION

**Patent documents cited in the description**

- US 4339975 A
- US 4311086 A
- US 5673601 A
- US 4319504 A
- US 4233872 A